# EUROPEAN PATENT SPECIFICATION

(11) **EP 2 339 662 B1**
(45) Date of publication and mention of the grant of the patent: **14.11.2012**
(21) Application number: 10251591.3
(22) Date of filing: 13.09.2010
(51) Int. Cl.: H01M 2/04

(54) **Secondary battery**
Sekundärbatterie
Batterie secondaire

(30) Priority: 30.11.2009 US 265238 P
(43) Date of publication of application: 29.06.2011
(73) Proprietor: Samsung SDI Co., Ltd., Gyeonggi-do (KR)
(72) Inventor: Baek, Woon-Seong, Suwon-si Gyeonggi-do (KR); Kim, Woody, Suwon-si Gyeonggi-do (KR); Yoon, Jong-Wook, Suwon-si Gyeonggi-do (KR)
(74) Representative: Taor, Simon Edward William

(56) References cited:
- EP-A1- 1 071 147
- US-A1- 2003 170 530
- US-A1- 2009 092 860

## Description

### BACKGROUND

### 1. Field of the Invention

An embodiment relates to a secondary battery and, more particularly, to a secondary battery capable of preventing poor welding or soldering between metal tabs while improving binding force between a metal tab of a PCM which is a protecting circuit module and a metal tab of a secondary protection device.

### 2. Discussion of Related Art

In general, a secondary battery is a battery in which inter-conversion between chemical energy and electrical energy is reversible, such that charging and discharging can repetitively be performed is raising a lot of interests as a driving power supply for mobile and portable IT apparatuses with a decrease in weight and an increase in functionality thereof.

A secondary battery typically includes a nickel-cadmium battery, a nickel-hydrogen battery, a nickel-zinc battery, or a lithium secondary battery, etc. Among them, since the lithium secondary battery is rechargeable and can have a small size and be miniaturized and high capacity and high operating voltage and high energy density per unit weight, lithium secondary batteries are widely used in an advanced electronic apparatus field and includes a lithium-ion battery, a lithium-ion polymer battery a lithium polymer battery, etc. as its type.

Typical secondary batteries in the related art include safety devices such as the protecting circuit module (PCM) and the secondary protection device in order to prevent an increase in high temperature, overcharge and overdischarge, or the like. In addition, in such devices PCM and the secondary protection device may be provided together. In this case, a secondary protection device is connected to one end of the PCM and a cell is connected to the other end of the PCM. Further, the secondary protection device is attached between the cell and the PCM and likewise protects the cell from overcurrent and heat emission of the cell. In addition, the secondary protection device is connected to the PCM through welding to the metal tab seated on the PCM and in this process, a problem often occurs. Since a position where the metal tab outside of the PCM is seated may be spaced from a position where the metal tab of the secondary protection device is seated by a predetermined distance, poor welding occurs or one-side metal tab is apart while inter-welding of the metal tabs due to the spacing.

### 1.1.1.1 SUMMARY OF THE INVENTION

In order to solve the above-mentioned problems, it is possible to improve the reliability of quality by preventing poor welding or soldering between metal tabs and preventing a tab attached a PCM from being apart while improving binding force between the metal tab of the PCM and a metal tab of a secondary protection device.

According to an aspect of the present invention, in a secondary battery having a protecting circuit module (PCM) and a secondary protection device, a metal tab of the PCM and a metal tab of a secondary protection device are connected to each other on the top of the PCM and at this time, any one of the metal tabs of the PCM and the secondary protection device is bent to be in close contact with the other one.

According to this aspect of the present invention, a passing portion through which the metal tab of the secondary protection device passes is formed in the PCM.

According to this aspect of the present invention, the passing portion has a groove or hole shape.

According to this aspect of the present invention, the metal tabs of the PCM and the secondary protection device are connected to each other by welding or soldering. Herein, the welding may use resistance welding.

According to this aspect of the present invention, a hole for welding is formed on both long-end and side-end surfaces in the upper case in order to inter-weld the secondary protection device and the metal tab. In addition, an additional separator may be provided in the upper case in order to protect the PCM from spark generated while inter-welding the metal tabs.

According to an aspect of the present invention, a secondary battery assembly is provided that comprises: a protection circuit module (PCM); a PCM tab provided with a first connection portion that projects from a first side of the PCM; a secondary protection device that is positioned on a second side of the PCM; a secondary protection device tab provided with a second connection portion that projects from the secondary protection device to the said first side of the PCM; wherein the first connection portion and the secondary connection portion are coupled together in a coupling region and wherein at least one of the said connection portions is bent towards the other of the connection portions, so as to reduce the separation between them in the coupling region. Preferred features of this aspect are set out in claims 2 to 15.

Using a secondary battery according to some embodiments of the present invention, it is possible to prevent poor welding or soldering between metal tabs, prevent a metal tab attached to a PCM from being apart, and improve the stabilization of a manufacturing process and the reliability of an operation and quality while improving binding force between the metal tab of the PCM and a metal tab of a secondary protection device.

### BRIEF DESCRIPTION OF THE DRAWINGS

The accompanying drawings, together with the specification illustrate exemplary embodiments of the present invention, and, together with the description, serve to explain the principles of the present invention.

FIG. 1A is a main cross-sectional view showing a state in which a spacing portion between a metal tab of a PCM and a metal tab of a secondary protection device are generated in a secondary battery;

FIG. 1B is a main cross-sectional view showing a state in which a metal tab of a PCM is partially apart while welding due to the spacing portion shown in FIG. 1 A;

FIG. 2 is a main cross-sectional view showing a PCM and a secondary protection device according to an embodiment of the present invention;

FIG. 3 is a main cross-sectional view showing a PCM and a secondary protection device according to another embodiment of the present invention;

FIG. 4A is a main perspective view of a PCM having a hole through which a metal tab of a secondary protection device passes;

FIG. 4B is a main perspective view of a PCM having a groove through which a metal tab of a secondary protection device passes;

FIG. 5 is a schematic diagram showing a state in which a PCM and a secondary protection device of an embodiment of the present invention is coupled to an upper case;

FIG. 6A is a schematic perspective view of an upper case relating to an embodiment of the present invention; and

FIG. 6B is a bottom perspective view of an upper case relating to an embodiment of the present invention.

### 1.1.1.2 DETAILED DESCRIPTION OF THE INVENTION

Hereinafter, embodiments of the present invention will be described in detail with reference to the accompanying drawings. Further, embodiments of the present invention are described to more completely describe the present invention to those skilled in the art and the embodiment described below may be modified in various other forms and the scope of the present invention is not limited to the embodiments described below.

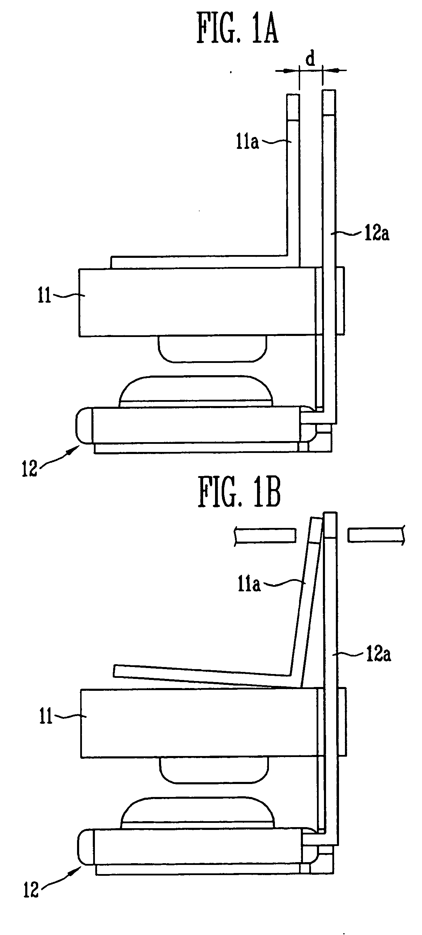

FIG. 1A is a diagram showing a state in which a metal tab of a PCM and a metal tab of a secondary protection device are spaced from each other before an embodiment of present invention is applied (i.e. of an arrangement not according to the invention), and FIG. 1B is a diagram showing a state in which a part of one metal tab is apart while welding with a metal tab being spaced from each other. Herein, the secondary protection device 12 is attached between a cell (not shown) and the PCM 11 to protect the cell from overcurrent and heat emission of the cell. The secondary protection device 12 is connected to one end of the PCM 11 and the cell is connected to the other end of the PCM 11, such that it is possible to use the cell for a long time by safely protecting the cell through controlling overcharge and overdischarge with power supplied from the outside.

However, as shown in FIGS. 1A and 1B, in the secondary battery 10, the metal tab 11 a of the PCM 11 and the metal tab 12a of the secondary protection device 12 are welded to each other with being spaced from each other. A spacing distance d is generated between the metal tabs 11 a and 12a of the PCM 11 and the secondary protection device 12 due to a distance between the outline of the PCM 11 and a position where the metal tab 11 a is seated which cannot help being generated in a manufacturing process of the PCM 11. In general, when the spacing distance is 0.2 mm or more, poor welding is caused at the time of welding the metal tabs 11 a and 12a to each other and the metal tab 11a of the PCM is apart as shown in FIG. 1A, thereby deteriorating the reliability of an operation and quality of a product. In other words, during the industrial process of the manufacture of the PCM, a gap (d) between the metal tab 11a and the metal tab 12a shown in FIG. 1A is inevitable. Moving the whole metal tab 11 a laterally so as to be closer to the metal tab 12a would risk the metal tab 11 a covering the hole through which the metal tab 12a passes.

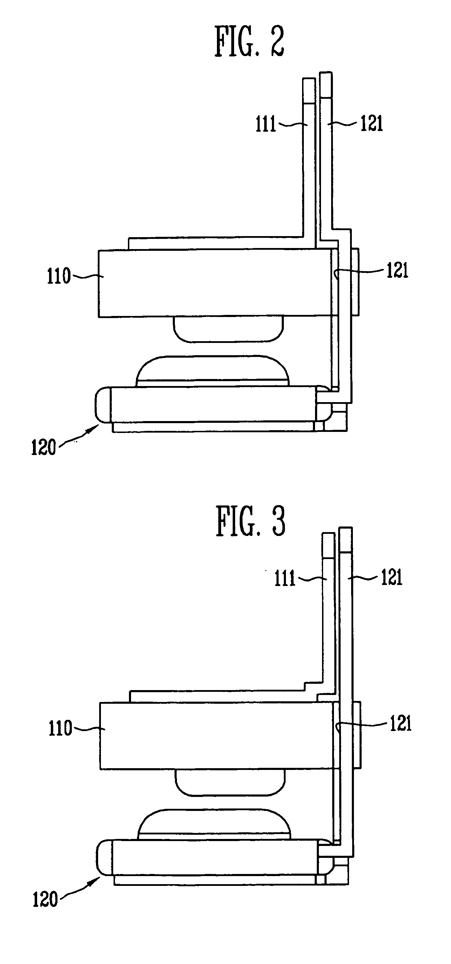

FIG. 2 is a diagram showing a state in which a metal tab 121 of a secondary protection device according to an embodiment of the present invention has a bend and in close contact with a PCM 110 in order to solve the above-mentioned problem. As shown in the figure, in the secondary battery 100 according to this embodiment of the present invention, a metal tab 111 of a protecting circuit module (PCM) 110 and a metal tab 121 of a secondary protection device 120 are connected to each other on the top of the PCM 110. As shown in FIG. 2, a bent portion 122 is formed in the metal tab 121 of the secondary protection device 120 on the top of the PCM so that the metal tab 121 is in close contact with the metal tab 111 of the PCM.

FIG. 3 shows another embodiment of the present invention, in which the metal tab 111 of the PCM has a bend on the top of the PCM 110, without there being a bend in the metal tab 121 of the secondary protection device. As a result of the bend in the metal tab 111 of the PCM, the metal tab 111 is in close contact with the metal tab 121 of the secondary protection device. As known in FIGS. 2 and 3, any one of the metal tabs 111 and 121 of the PCM 110 and the secondary protection device 120 may have a bend to be in close contact with the other one. In the embodiment shown in FIG. 2, the metal tab 121 of the secondary protection device 120 has a bend to be in close contact with the metal tab 111 of the PCM 110. For this, the metal tab 121 of the secondary protection device 120 may have a bent portion 122 positioned on the top of the PCM 110. Likewise, in FIG. 3, the metal tab 111 of the PCM 110 has a bend on the top of the PCM 110 to be in close contact with the metal tab 121 of the secondary protection device 120.

In other words, in the embodiments of FIGS. 2 and 3, a secondary battery assembly is provided that comprises a protection circuit module (PCM), a PCM tab provided with a first connection portion that projects from a first side of the PCM; a secondary protection device that is positioned on a second side of the PCM; and a secondary protection device tab provided with a second connection portion that projects from the secondary protection device to the said first side of the PCM. As shown in FIGS. 2 and 3, the first connection portion and the secondary connection portion are coupled together (e.g. welded or soldered) in a coupling region and at least one of the said connection portions is bent towards the other of the connection portions, so as to reduce the separation between them in the coupling region.

At least one of the connection portions that is bent towards the other of the connection portions comprises a bridge portion that at least partially bridges a gap between the connection portions. In some embodiments, such a bridge portion comprises an extension portion that extends substantially parallel to a surface of the PCM. Such a bridge portion can comprise an extension portion that extends substantially perpendicular to a surface of the PCM. Such a bridge portion can be formed on the first connection portion and/or second connection portion.

The PCM can comprise an access formation through which the second connection portion extends from the second side of the PCM to the first side of the PCM. The access formation can comprise, for example, an aperture formed in the PCM or a groove formed in an edge region of the PCM.

The metal tab 121 may use a tab made of various materials for energization and like the embodiment, may use a nickel tab (Ni-tab).

The bent portion may be formed by one-time bending in the embodiment and is not limited thereto and may have a bending structure of various types so that the metal tab of the PCM 110 and the metal tab 121 of the secondary protection device 120 are in close contact with each other.

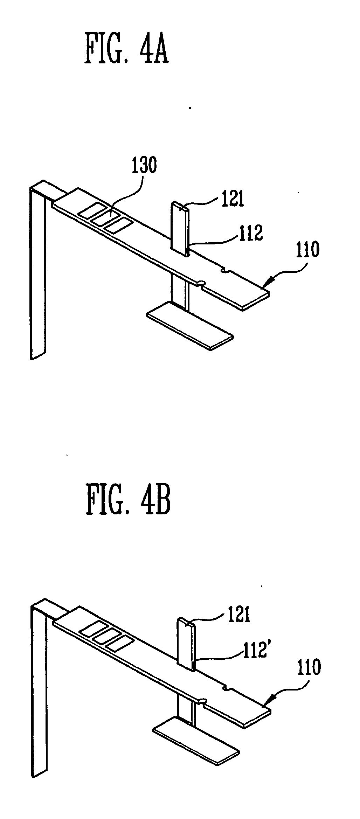

FIGS. 4A and 4B are diagrams showing a state in which a metal tab of a secondary protection device passes through a PCM. As known in the figures, the secondary protection device 120 is positioned below the PCM 110 and the metal tab 111 of the PCM 110 and the metal tab 121 of the secondary protection device 120 may be formed on the top region. For example, a passing portion for passing the metal tab 121 of the secondary protection device 120 may be formed in order to connect an opposite side of the secondary protection device 120 or a formation direction of an external terminal the PCM 110. The passing portion may have a shape of a groove 112 of which one side is opened in the PCM or a shape of a hole 112' and may be formed to have a shape corresponding to a shape of the metal tab 121 of the secondary protection device 120 to be passed.

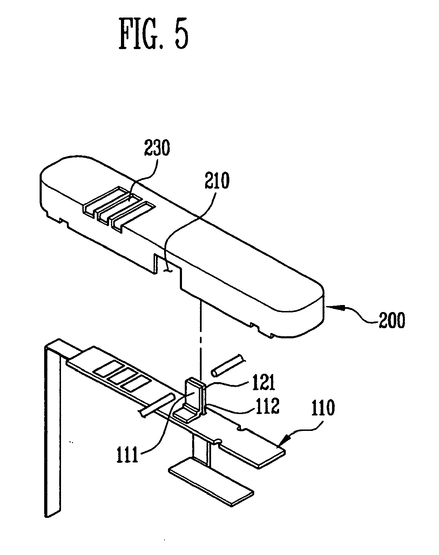

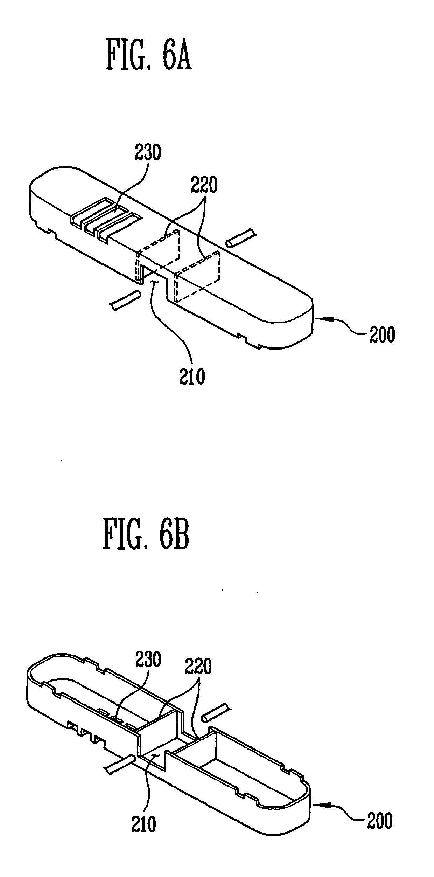

FIG. 5 is a schematic diagram showing a state in which a PCM and a secondary protection device of an embodiment of the present invention is coupled to an upper case. FIG. 6A is a schematic perspective view of an upper case according to an embodiment of the present invention and FIG. 6B is a bottom perspective view of an upper case according to an embodiment of the present invention.

As known in the figure, in this embodiment an additional spacing portion 210 is be formed in the upper case 200 on which the PCM is seated in order to inter-weld and connect the metal tab 111 of the PCM and the metal tab 112 of the secondary protection device to each other. The spacing portion is a space for locating a welding rod for inter-welding the metal tabs 111 and 112 is positioned on the top of the PCM 110. The spacing portion 210 may be formed on both long-end and side-end surfaces of the upper case 200. In such embodiments of the present invention, the metal tabs 111 and 121 of the PCM 110 and the secondary protection device 120 can be connected to each other by welding or soldering to more stably and accurately access each other and preferably uses a welding method. Alternatively, the tabs access each other by heat and may be connected to each other by using a medium member made of a conductive material. Meanwhile, herein, the welding may use resistance welding performing welding with resistance heat by allowing high current to flow on a parent material.

FIGS. 6A and 6B are diagrams more specifically showing an upper case according to some embodiments of the present invention. In such embodiments of the present invention, the additional spacing portion 210 for resistance-welding may be formed in the upper case 200 and an additional separator 220 may be formed inside on the top surface of the upper case 200 in order to protect the PCM 110 from spark, etc. generated while resistance welding. The welding rod is positioned on the separator 220, such that even though the metal tabs 111 and 121 are inter-welded to each other to serve as a protection wall to prevent the other part of the PCM from being damaged. In FIG. 6, reference numeral 230 represents a terminal hole.

Therefore, in some embodiments of the invention, the battery assembly can further comprise an upper case that is located over the PCM and the secondary protection device. In such embodiments, the upper case can include side walls located on either side of the PCM and the secondary protection device, with at least one opening being formed in at least one of the side walls in a region thereof that corresponds to the position of the connection portions.

In some embodiments of the invention there is at least one separator wall located between the connection portions and a volume of space located within the upper case. Such separator walls can protect the other components in the PCM from being damaged during coupling of the first connection portion and the secondary connection portion of embodiments of the invention. For example, as shown in FIG. 6A and 6B, two separator walls 220 can be provided adjacent the opening 210 in the sides of the upper case 200. Hence, separators 220 protect the other components of the PCM during coupling from sparks and/or heat from coupling.

In some embodiments, such as the one shown in FIG. 6A and 6B, the or each separator acts to close off the coupling region from the remainder of the upper case of the PCM. Hence, coupling can take place with the upper case is located over the PCM and the secondary protection device, without damage to the other components of the PCM (for example from a spark or heat from coupling). Hence, the or each separator can act to thermally insulate and/or protect from spark the rest of the components covered by the upper case from the coupling region. The separator can be formed of one or more separator walls or can have other suitable configurations.

Further, the secondary battery 100 according to some embodiments of the present invention may be a battery of which a case has a cylindrical shape housing an electrode assembly or a rectangular shape and besides, the secondary battery 100 may be formed of a polymer type.

An operation of the secondary battery 100 according to some embodiments the present invention having the above-mentioned configuration will be described below.

The metal tab 111 of the PCM 110 and the metal tab 121 of the secondary protection device 120 can be connected to each other on the top of the PCM 110 in a forming direction of an external terminal, such that it is possible to prevent poor access in welding or soldering the metal tabs while improving binding force between the metal tabs 111 and 121 of the PCM 110 and the secondary protection device 120 by minimizing or removing a spacing distance between the metal tabs 111 and 121.

Further, any one of the metal tabs 111 and 121 of the PCM 110 and the secondary protection device 120 is bent (or has a bend) to be in close contact with the other one. For this, for example, a bent portion is formed by bending the metal tab 121 of the secondary protection device 120, such that a shape of the metal tab 121 of the secondary protection device 120 coincides with a shape of the metal tab 111 of the PCM 110 in order to prevent the metal tab 121 attached to the PCM 110 from being apart or the metal tab 111 on the top of the PCM 110 is bent and in further close contact with the metal tab 121 of the secondary protection device 120 in order to remarkably improve weldability. Further, welding is facilitated by forming the additional welding spacing portion 210 in the upper case 200 while the welding and in addition, an additional separator 230 for protecting the device such as the PCM 110, etc. from spark generated while the welding may be additionally formed in the upper case 200.

By the secondary battery 100 according to some embodiments of the present invention, it is possible to stabilize a manufacturing process by improving the reliability for connection between the PCM 110 and the secondary protection device 120 and the assembling workability and furthermore, to improve the reliability of the operation of the secondary battery and the quality of the secondary battery.

As described above, although a detailed embodiment has been described in detail, various modifications can be made without departing from the scope of the present invention. Accordingly, the scope of the present invention should not be limited based on the described embodiments and should be determined in light of the appended claims to be described below and equivalents thereto.

## Claims

1. A secondary battery assembly comprising:
a protection circuit module (PCM);
a PCM tab provided with a first connection portion that projects from a first side of the PCM;
a secondary protection device that is positioned on a second side of the PCM;
a secondary protection device tab provided with a second connection portion that projects from the secondary protection device to the said first side of the PCM;
wherein the first connection portion and the secondary connection portion are coupled together in a coupling region and wherein at least one of the said connection portions is bent towards the other of the connection portions, so as to reduce the separation between them in the coupling region.

2. A battery assembly according to Claim 1, wherein the PCM comprises an access formation through which the second connection portion extends from the second side of the PCM to the first side of the PCM.

3. A battery assembly according to Claim 2, wherein the access formation comprises an aperture formed in the PCM.

4. A battery assembly according to Claim 2, wherein the access formation comprises a groove formed in an edge region of the PCM.

5. A battery assembly according to any preceding claim, wherein at least one of the connection portions that is bent towards the other of the connection portions comprises a bridge portion that at least partially bridges a gap between the connection portions.

6. A battery assembly according to Claim 5, wherein the or a said bridge portion comprises an extension portion that extends substantially parallel to a surface of the PCM.

7. A battery assembly according to Claim 5 or 6, wherein the or a said bridge portion comprises an extension portion that extends substantially perpendicular to a surface of the PCM.

8. A battery assembly according to Claim 5, 6 or 7 wherein a said bridge portion is provided on the first connection portion.

9. A battery assembly according to Claim 5, 6, 7 or 8 wherein a said bridge portion is provided on the said second connection portion.

10. A battery assembly according to any preceding claim, wherein the said PCM tab comprises a mounting portion that is mounted on a surface situated on the first side of the PCM, the said first connection portion being integrally formed with and projecting from the said mounting portion.

11. A battery assembly according to any preceding claim, further comprising an upper case that is located over the PCM and the secondary protection device, wherein the upper case includes side walls located on either side of the PCM and the secondary protection device and wherein at least one opening is formed in at least one of the side walls in a region thereof that corresponds to the position of the connection portions.

12. A battery assembly according to Claim 11, comprising at least one separator wall located between the connection portions and a volume of space located within the upper case.

13. A battery assembly according to Claim 12, wherein the separator wall is located in a region adjacent a said opening.

14. A battery assembly according to Claim 12 or 13, comprising a pair of separator walls, one being located on either side of the connection portions.

15. A battery assembly according to any preceding claim, wherein the first connection portion and the secondary connection portion are welded or soldered together in a coupling region.

## Patentansprüche

1. Sekundärbatterieanordnung, die aufweist:
ein Schutzschaltungsmodul (PCM);
eine Schutzschaltungsmodulkontaktnase, die mit einem ersten Verbindungsabschnitt versehen ist, der aus einer ersten Seite des Schutzschaltungsmoduls vorsteht;
ein sekundäres Schutzelement, das auf einer zweiten Seite des Schutzschaltungsmoduls positioniert ist;
eine sekundäre Schutzelementkontaktnase, die mit einem zweiten Verbindungsabschnitt versehen ist, der aus dem sekundären Schutzelement zur ersten Seite des Schutzschaltungsmoduls vorsteht;
wobei der erste Verbindungsabschnitt und der zweite Verbindungsabschnitt in einem Verbindungsbereich miteinander verbunden sind, und wobei mindestens einer der Verbindungsabschnitte in Richtung des anderen der Verbindungsabschnitte gebogen ist, um so die Trennung zwischen ihnen im Verbindungsbereich zu verringern.

2. Batterieanordnung nach Anspruch 1, bei der das Schutzschaltungsmodul eine Zugangsausbildung aufweist, durch die sich der zweite Verbindungsabschnitt von der zweiten Seite des Schutzschaltungsmoduls zur ersten Seite des Schutzschaltungsmoduls erstreckt.

3. Batterieanordnung nach Anspruch 2, bei der die Zugangsausbildung eine im Schutzschaltungsmodul gebildete Öffnung aufweist.

4. Batterieanordnung nach Anspruch 2, bei der die Zugangsausbildung eine in einem Randbereich des Schutzschaltungsmoduls ausgebildete Rille aufweist.

5. Batterieanordnung nach einem der vorhergehenden Ansprüche, bei der mindestens einer der Verbindungsabschnitte, der in Richtung des anderen der Verbindungsabschnitte gebogen ist, einen Brückenabschnitt aufweist, der mindestens teilweise einen Spalt zwischen den Verbindungsabschnitten überbrückt.

6. Batterieanordnung nach Anspruch 5, bei der der oder ein Brückenabschnitt einen Verlängerungsabschnitt aufweist, der sich im Wesentlichen parallel zu einer Fläche des Schutzschaltungsmoduls erstreckt.

7. Batterieanordnung nach Anspruch 5 oder 6, bei der der oder ein Brückenabschnitt einen Verlängerungsabschnitt aufweist, der sich im Wesentlichen senkrecht zu einer Fläche des Schutzscltaltungsmoduls erstreckt.

8. Batterieanordnung nach Anspruch 5, 6 oder 7, bei der ein Brückenabschjütt am ersten Verbindungsabschnitt vorhanden ist.

9. Batterieanordnung nach Anspruch 5, 6, 7 oder 8, bei der ein Brückenabschnitt am zweiten Verbindungsabschnitt vorhanden ist.

10. Batterieanordnung nach einem der vorhergehenden Anspruche, bei der die Schutzschaltungsmodulkontaktnase einen Montageabschnitt aufweist, der auf einer Fläche montiert ist, die sich auf der ersten Seite des Schutzschaltungsmoduls befindet, wobei der erste Verbindungsabschnitt zusammenhängend mit dem Montageabschnitt ausgebildet ist und aus diesem vorsteht.

11. Batterieanordnung nach einem der vorhergehenden Ansprüche, die außerdem ein oberes Gehäuse aufweist, das sich über dem Schutzschaltungsmodul und dem sekundären Schutzelement befindet, wobei das obere Gehäuse Seitenwände umfasst, die auf beiden Seiten des Schutzschaltungsmoduls und des sekundären Schutzelementes angeordnet sind, und wobei mindestens eine Öffnung in mindestens einer der Seitenwände in einem Bereich davon ausgebildet ist, der der Position der Verbindungsabschnitte entspricht.

12. Batterieanordnung nach Anspruch 11, die mindestens eine Trennwand aufweist, die zwischen den Verbindungsabschnitten und einem Raumvolumen angeordnet ist, das sich innerhalb des oberen Gehäuses befindet.

13. Batterieanordnung nach Anspruch 12, bei der sich die Trennwand in einem Bereich befindet, der der Öffnung benachbart ist.

14. Batterieanordnung nach Anspruch 12 oder 13, die ein Paar Trennwände aufweist, wobei eine auf beiden Seiten der Verbindungsabschnitte angeordnet ist.

15. Batterieanordnung nach einem der vorhergehenden Ansprüche, bei der der erste Verbindungsabschnitt und der zweite Verbindungsabschnitt in einem Verbindungsbereich miteinander verschweißt oder verlötet sind.

## Revendications

1. Assemblage de batterie secondaire, comprenant :
un module de circuit de protection (PCM) ;
une languette PCM, comportant une première partie de connexion débordant à partir d'un premier côté du PCM ;
un dispositif de protection secondaire, positionné sur un deuxième côté du PCM ;
une languette du dispositif de protection secondaire, comportant une deuxième partie de connexion, débordant du dispositif de protection secondaire vers ledit premier côté du PCM ;
la première partie de connexion et la partie de connexion secondaire étant accouplées dans une région d'accouplement, au moins une desdites parties de connexion étant fléchie vers l'autre partie des parties de connexion, de sorte à réduire la séparation entre elles dans la région d'accouplement.

2. Assemblage de batterie selon la revendication 1, dans lequel le PCM comprend une structure d'accès à travers laquelle la deuxième partie de connexion s'étend du deuxième côté du PCM vers le premier côté du PCM.

3. Assemblage de batterie selon la revendication 2, dans lequel la structure d'accès comprend une ouverture formée dans le PCM.

4. Assemblage de batterie selon la revendication 2, dans lequel la structure d'accès comprend une rainure formée dans une région de bordure du PCM.

5. Assemblage de batterie selon l'une quelconque des revendications précédentes, dans lequel au moins une des parties de connexion, fléchie vers l'autre partie des parties de connexion, comprend une partie de liaison, assurant au moins partiellement le pontage d'un espace entre les parties de connexion.

6. Assemblage de batterie selon la revendication 5, dans lequel la ou une dite partie de liaison comprend une partie d'extension s'étendant de manière pratiquement parallèle à une surface du PCM.

7. Assemblage de batterie selon les revendications 5 ou 6, dans lequel la ou une dite partie de liaison comprend une partie d'extension s'étendant de manière pratiquement perpendiculaire à une surface du PCM.

8. Assemblage de batterie selon les revendications 5, 6 ou 7, dans lequel une dite partie de liaison est agencée sur la première partie de connexion.

9. Assemblage de batterie selon les revendications 5, 6, 7 ou 8, dans lequel une dite partie de liaison est agencée sur ladite deuxième partie de connexion.

10. Assemblage de batterie selon l'une quelconque des revendications précédentes, dans lequel ladite languette PCM comprend une partie de montage montée sur une surface située sur le premier côté du PCM, ladite première partie de connexion étant formée d'une seule pièce avec ladite partie de montage et débordant de celle-ci.

11. Assemblage de batterie selon l'une quelconque des revendications précédentes, comprenant en outre un boîtier supérieur, agencé au-dessus du PCM et du dispositif de protection secondaire, le boîtier supérieur englobant des parois latérales agencées de chaque côté du PCM et du dispositif de protection secondaire, au moins une ouverture étant formée dans au moins une des parois latérales, dans une région de celle-ci correspondant à la position des parties de connexion.

12. Assemblage de batterie selon la revendication 11, comprenant au moins une paroi de séparation entre les parties de connexion et un volume d'un espace situé dans le boîtier supérieur.

13. Assemblage de batterie selon la revendication 12, dans lequel la paroi de séparation est agencée dans une région adjacente à une dite ouverture.

14. Assemblage de batterie selon les revendications 12 ou 13, comprenant une paire de parois de séparation, une paroi étant agencée de chaque côté des parties de connexion.

15. Assemblage de batterie selon l'une quelconque des revendications précédentes, dans lequel la première partie de connexion et la partie de connexion secondaire sont assemblées par soudage ou brasage dans une région d'accouplement.
